# EUROPÄISCHE PATENTANMELDUNG

(11) **EP 4 524 393 A1**
(43) Veröffentlichungstag der Anmeldung: **19.03.2025**
(21) Anmeldenummer: 23196953.6
(22) Anmeldetag: 12.09.2023
(51) Int. Cl.: F03D 13/10

(54) **TURM FÜR EINE WINDENERGIEANLAGE, WINDENERGIEANLAGE UND VERFAHREN ZUR HERSTELLUNG**

(71) Anmelder: Wobben Properties GmbH, 26607 Aurich (DE)
(72) Erfinder: Longeru, Markus, Aurich (DE); Knoop, Frank, Aurich (DE); Nordmann, Markus, Aurich (DE)
(74) Vertreter: Eisenführ Speiser

(57) **Zusammenfassung**

Die Erfindung betrifft einen Turm (120) für eine Windenergieanlage (100), eine Windenergieanlage (100), ein Verfahren (1000) zur Herstellung eines Turms (120) einer Windenergieanlage (100) sowie ein Verfahren (2000) zur Herstellung einer Windenergieanlage. Der Turm (120) umfasst einen Haupt-Turm (122) mit einem Turmfuß und einem Turmkopf, wobei der Turmkopf ausgebildet ist zur Aufnahme einer Gondel (104) einer Windenergieanlage (100), mindestens einen Satelliten-Turm (210, 220, 1210, 1220, 1230), wobei der mindestens eine Satelliten-Turm (210, 220, 1210, 1220, 1230) mit dem Haupt-Turm (122) über eine zug- und druckfeste Verbindung (300, 1300) verbunden ist.

## Beschreibung

Die Erfindung betrifft einen Turm für eine Windenergieanlage, eine Windenergieanlage, ein Verfahren zur Herstellung eines Turms einer Windenergieanlage sowie ein Verfahren zur Herstellung einer Windenergieanlage.

Windenergieanlagen sind grundsätzlich bekannt. Moderne Windenergieanlagen betreffen in der Regel sogenannte Horizontalachsen-Windenergieanlagen, bei denen die Rotorachse im Wesentlichen horizontal ausgerichtet ist und die Rotorblätter im Betrieb eine im Wesentlichen senkrechte Rotorfläche überstreichen. Windenergieanlagen umfassen neben einem an einer Gondel angeordneten Rotor in der Regel einen Turm, auf dem die Gondel mit dem Rotor um eine im Wesentlichen vertikal ausgerichtete Achse drehbar angeordnet ist.

Türme für Windenergieanlagen sind in der Regel schlanke Bauwerke, die vorzugsweise eine große Höhe aufweisen und ferner vorzugsweise orthogonal zu dieser Höhe vergleichsweise geringe Abmessungen aufweisen. Türme bestehen vorzugsweise im Wesentlichen aus Beton und/oder Stahl oder umfassen diese Materialien. Die Bandbreite von Turmausführungen reicht von Gitterkonstruktionen oder Stahlrohrtürmen bis hin zu Betonbauten. Eine bevorzugte Konstruktion von Windenergieanlagen-Türmen umfasst einen unteren Turmabschnitt aus Beton und/oder Stahlbeton und/oder Spannbeton und einen oberen Turmabschnitt aus Stahl.

Türme für Windenergieanlagen können aus einem einzelnen Bauteil oder zwei oder mehreren Bauteilen bestehen oder derartige Bauteile umfassen. Türme können ferner zylindrische und/oder konische Turmabschnitte, insbesondere entlang ihrer Längserstreckung, aufweisen, wobei Türme oftmals zylindrische und konische Turmabschnitte umfassen. Darüber hinaus können derartige Turmabschnitte auch ringsegmentweise ausgebildet werden, sodass ein Turmabschnitt aus verschiedenen nebeneinander angeordneten Segmenten in Ringrichtung bzw. Umfangsrichtung zusammengesetzt ist.

Türme von Windenergieanlagen, insbesondere von modernen Horizontalachsen-Windenergieanlagen, tragen zu einem erheblichen Teil zu den Gesamtkosten der Herstellung einer Windenergieanlage bei. Insbesondere die größer werdenden Rotordurchmesser und Leistungen von Windenergieanlagen führen dazu, dass auch die Türme größer werden und/oder höheren Belastungen ausgesetzt sind. Die Türme werden einerseits hinsichtlich ihrer Höhe größer und andererseits in Bezug auf ihren Durchmesser, der bei einer Vielzahl heutiger Windenergieanlagen bereits 8 Meter und mehr aufweist. Vor allem die Fertigung und/oder Montage und/oder Logistik der Türme ist bzw. sind zeit- und kostenaufwändig.

Im Stand der Technik bestehen verschiedene Ansätze zur Reduktion der Kosten und zur Erhöhung der Tragfähigkeit von Windenergieanlagen-Türmen, jedoch sind weitere Verbesserungen wünschenswert.

Es ist daher eine Aufgabe der vorliegenden Erfindung, eine verbesserte Lösung bereitzustellen, insbesondere einen Turm für eine Windenergieanlage, eine Windenergieanlage, ein Verfahren zur Herstellung eines Turms einer Windenergieanlage sowie ein Verfahren zur Herstellung einer Windenergieanlage bereitzustellen, welche die genannten Nachteile vermindern oder beseitigen.

Insbesondere ist es eine Aufgabe der vorliegenden Erfindung, einen Turm für eine Windenergieanlage, eine Windenergieanlage, ein Verfahren zur Herstellung eines Turms einer Windenergieanlage sowie ein Verfahren zur Herstellung einer Windenergieanlage bereitzustellen, welche kostensparend sind und/oder die Tragfähigkeit verbessern.

Diese Aufgabe wird erfindungsgemäß gelöst durch einen Turm für eine Windenergieanlage, umfassend einen Haupt-Turm mit einem Turmfuß und einem Turmkopf, wobei der Turmkopf ausgebildet ist zur Aufnahme einer Gondel einer Windenergieanlage, mindestens einen Satelliten-Turm, wobei der mindestens eine Satelliten-Turm mit dem Haupt-Turm über eine zug- und druckfeste Verbindung verbunden ist.

Die hier beschriebene Lösung beruht insbesondere auf der Erkenntnis, dass die Tragfähigkeit eines Turms erhöht werden kann bzw. dessen Kosten gesenkt werden können, wenn ein Teil der Lastabtragung über einen sogenannten Satelliten-Turm erfolgt. Dabei ist gemäß der hier beschriebenen Lösung vorgesehen, dass der Satelliten-Turm mit dem Haupt-Turm über eine zug- und druckfeste Verbindung verbunden ist. Darunter ist insbesondere eine Verbindung zu verstehen, die nicht nur oder zumindest nicht hauptsächlich Zugkräfte übertragen kann, wie beispielsweise existierende Lösungen, die mit (Seil-)Abspannungen arbeiten, sondern eine Verbindung, die auch für die Lastabtragung und/oder Tragfähigkeit des Haupt-Turms relevante Druckkräfte übertragen kann. Dies bedeutet, dass über die Verbindung der Satelliten-Turm auch zur Abstützung (und nicht nur zur Abspannung) des Haupt-Turms beitragen kann.

Dies ist insbesondere vorteilhaft, da Türme oft Belastungen ausgesetzt sind, die über die Zeit in ihrer Richtung variieren, so dass in derselben Richtung über die Zeit verteilt sowohl Zug- als auch Druckkräfte auftreten können. Eine Verbindung, die sowohl Zug- als auch Druckkräfte aufnehmen kann, erübrigt somit beispielsweise zwei gegenüberliegende Abspannungen, die jeweils nur oder hauptsächlich Zugkräfte aufnehmen können.

Ein Satelliten-Turm ist, wie auch noch im Folgenden weiter beschrieben, vorzugsweise ein Hilfsturm und/oder von geringerer Höhe als der Haupt-Turm und/oder vom Haupt-Turm beabstandet und/oder im Wesentlichen parallel zum Haupt-Turm angeordnet.

Sofern hiervon mindestens einem Satelliten-Turm die Rede ist, gelten die entsprechenden Ausführungen auch für Ausführungsformen mit zwei oder mehreren Satelliten-Türmen, wenn nicht anders angegeben.

Nach einer bevorzugten Ausführungsform kann die zug- und druckfeste Verbindung zwischen dem Haupt-Turm und dem mindestens einen Satelliten-Turm Zug- und Druckkräfte in im Wesentlichen gleicher Höhe aufnehmen. Dies bedeutet insbesondere, dass die Verbindung Kräfte in im Wesentlichen gleicher Höhe in zwei im Wesentlichen entgegengesetzten Richtungen aufnehmen kann.

Gemäß einer bevorzugten Ausführungsform ist vorgesehen, dass die zug- und druckfeste Verbindung zwischen dem Haupt-Turm und dem mindestens einen Satelliten-Turm eine erste und eine zweite Verbindung umfasst. Insbesondere ist dabei bevorzugt, dass die erste Verbindung eine schräg nach oben verlaufende Verbindung ist und/oder die zweite Verbindung eine im Wesentlichen horizontale Verbindung ist. Auf diese Weise kann eine effiziente Aufteilung der Lastabtragung der Zug- und Druckkräfte über die Verbindung erfolgen. Die erste und zweite Verbindung können demnach in ihrer Art und Ausrichtung so gewählt werden, dass eine möglichst effiziente Lastabtragung erfolgt. Optional können auch zwei oder mehrere Satelliten-Türme untereinander durch eine dritte verbunden sein.

Gemäß einer bevorzugten Ausführungsform ist vorgesehen, dass der Haupt-Turm und der mindestens eine Satelliten-Turm asymmetrisch angeordnet sind. Mit einer asymmetrischen Anordnung ist insbesondere eine Anordnung gemeint, bei der, insbesondere im Querschnitt orthogonal zu einer Längsachse des Turms und/oder im Längsschnitt durch die Längsachse des Turms, keine den mindestens einen Satelliten-Turm enthaltende symmetrische Anordnung vorliegt. Vorzugsweise liegt auch keine Rotationssymmetrie vor. Bei beispielsweise aus dem Stand der Technik bekannten gegenüberliegenden Abspannungen eines Turms liegt eine symmetrische Anordnung vor. Die hier beschriebene Lösung hingegen beruht vorzugsweise auf einer asymmetrischen Anordnung, bei der vorzugsweise weder eine Symmetrie im Längs- oder Querschnitt noch eine Rotationssymmetrie vorliegen.

Eine weitere bevorzugte Fortbildung zeichnet sich dadurch aus, dass der mindestens eine Satelliten-Turm eine geringere Höhe aufweist als der Haupt-Turm. Eine Verstärkung des Turms durch den mindestens einen Satelliten-Turm ist insbesondere im unteren Teil des Haupt-Turms vorteilhaft. Vorzugsweise erstreckt sich daher der mindestens eine Satelliten-Turm über maximal Dreiviertel, vorzugsweise maximal die Hälfte, vorzugsweise maximal ein Drittel, vorzugsweise maximal ein Viertel der Höhe des Haupt-Turms. Insbesondere erstreckt sich der mindestens eine Satelliten-Turm bis maximal kurz oberhalb der unteren Position der Rotorblätter.

Ferner ist vorzugsweise vorgesehen, dass der mindestens eine Satelliten-Turm vom Haupt-Turm beabstandet und/oder im Wesentlichen parallel zum Haupt-Turm angeordnet ist. Sowohl der Haupt-Turm und der mindestens eine Satelliten-Turm sind vorzugsweise im Wesentlichen vertikal ausgerichtet. Der mindestens eine Satelliten-Turm kann beabstandet vom Haupt-Turm angeordnet sein, wobei vorzugsweise die Verbindung diesen Abstand überbrückt. Alternativ kann der mindestens eine Satelliten-Turm direkt über seine gesamte Höhe oder einen Teil davon am Haupt-Turm angeordnet sein, so dass die Verbindung über die gesamte Höhe des mindestens einen Satelliten-Turms oder eines Teils davon besteht.

Gemäß einer bevorzugten Ausführungsform ist ferner vorgesehen, dass der mindestens eine Satelliten-Turm nicht zur Aufnahme einer Gondel einer Windenergieanlage ausgebildet ist.

In einer weiteren bevorzugten Ausführungsform ist vorgesehen, dass der mindestens eine Satelliten-Turm einen Speicher aufweist und/oder als Speicher ausgebildet ist. Insbesondere kann ein Innenraum des mindestens einen Satelliten-Turms einen Speicher aufweisen und/oder als Speicher ausgebildet sein. Auf diese Weise kann der von dem mindestens einen Satelliten-Turm umschlossene Raum effizient genutzt werden. Der Speicher kann beispielsweise ein Energie-Speicher und/oder ein Materialspeicher sein.

Eine weitere bevorzugte Fortbildung umfasst zwei oder mehrere Satelliten-Türme. Wie oben bereits erwähnt, gelten die Ausführungen für einen Satelliten-Turm entsprechend für zwei oder mehrere Satelliten-Türme, sofern nicht anders angegeben.

Dabei ist insbesondere bevorzugt, dass der Haupt-Turm und die zwei oder mehreren Satelliten-Türme asymmetrisch angeordnet sind. Insbesondere bei zwei oder mehreren Satelliten-Türmen ist eine Anordnung bevorzugt, die eine Symmetrie im Längs- und/oder Querschnitt und/oder eine Rotationssymmetrie vermeidet.

Gemäß einer bevorzugten Ausführungsform ist genau ein Satelliten-Turm vorgesehen. Alternativ können genau zwei Satelliten-Türme oder genau drei Satelliten-Türme vorgesehen sein.

Gemäß einem weiteren Aspekt der Erfindung wird die eingangs genannte Aufgabe gelöst durch eine Windenergieanlage mit einem zuvor beschriebenen Turm.

Gemäß einem weiteren Aspekt der Erfindung wird die eingangs genannte Aufgabe gelöst durch ein Verfahren zur Herstellung eines Turms einer Windenergieanlage, insbesondere eines zuvor beschriebenen Turms, umfassend: Bereitstellen eines Haupt-Turms mit einem Turmfuß und einem Turmkopf, wobei der Turmkopf ausgebildet ist zur Aufnahme einer Gondel einer Windenergieanlage, Bereitstellen mindestens eines Satelliten-Turms, Verbinden des mindestens einen Satelliten-Turms mit dem Haupt-Turm über eine zug- und druckfeste Verbindung.

Gemäß einem weiteren Aspekt der Erfindung wird die eingangs genannte Aufgabe gelöst durch ein Verfahren zur Herstellung einer Windenergieanlage, umfassend: Bereitstellen eines zuvor beschriebenen Turms, vorzugsweise durch ein zuvor beschriebenes Verfahren, Anordnen einer Gondel am Turmkopf des Haupt-Turms.

Hinsichtlich der Vorteile, bevorzugten Ausführungsformen und Details der einzelnen Aspekte und ihrer bevorzugten Ausführungsformen wird ebenfalls auf die entsprechenden Vorteile, bevorzugten Ausführungsformen und Details verwiesen, die mit Bezug auf die jeweils anderen Aspekte beschrieben sind.

Weitere vorteilhafte Ausführungsformen ergeben sich aus der Kombination einzelner, mehrerer oder aller der hier beschriebenen bevorzugten Merkmale.

Bevorzugte Ausführungsbeispiele werden beispielhaft anhand der beiliegenden Figuren beschrieben. Es zeigen:
- Figur 1:: eine schematische Darstellung einer Windenergieanlage;
- Figur 2:: eine schematische Darstellung eines Ausführungsbeispiels eines Turms einer Windenergieanlage;
- Figur 3:: einen Schnitt durch den Turm nach Fig. 2;
- Figur 4:: eine schematische Knoten-Darstellung eines Ausführungsbeispiels eines Turms einer Windenergieanlage;
- Figur 5:: eine schematische Darstellung eines Verbindungsdetails eines Ausführungsbeispiels eines Turms einer Windenergieanlage;
- Figur 6:: eine schematische Darstellung eines weiteren Ausführungsbeispiels eines Turms einer Windenergieanlage;
- Figur 7:: ein schematisches Ablaufdiagramm eines Ausführungsbeispiels eines Verfahrens zur Herstellung eines Turms einer Windenergieanlage; und
- Figur 8:: ein schematisches Ablaufdiagramm eines Ausführungsbeispiels eines Verfahrens zur Herstellung einer Windenergieanlage.

In den Figuren sind gleiche oder im Wesentlichen funktionsgleiche Elemente mit den gleichen Bezugszeichen versehen. Allgemeine Beschreibungen beziehen sich in der Regel auf alle Ausführungsformen, sofern Unterschiede nicht explizit angegeben sind.

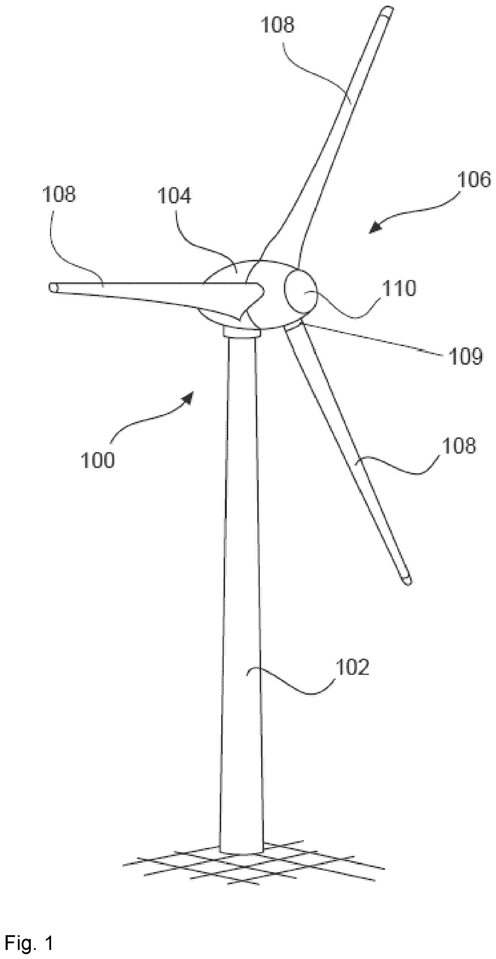

Fig. 1 zeigt eine schematische Darstellung einer Windenergieanlage 100, für die die hier beschriebene Lösung zum Einsatz kommen kann. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage durch den Wind in eine Drehbewegung versetzt und dreht somit auch einen elektrodynamischen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 108 können durch Pitchmotoren an den Rotorblattwurzeln der jeweiligen Rotorblätter 108 verändert werden.

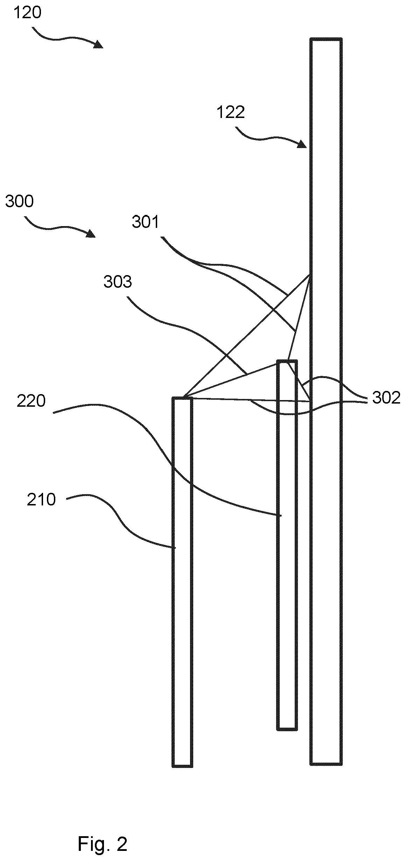

Der Turm 120 umfasst gemäß den Figuren 2-5 einen Haupt-Turm 122 mit einem Turmfuß und einem Turmkopf. Am Turmkopf kann eine Gondel 104 einer Windenergieanlage 100 angeordnet werden.

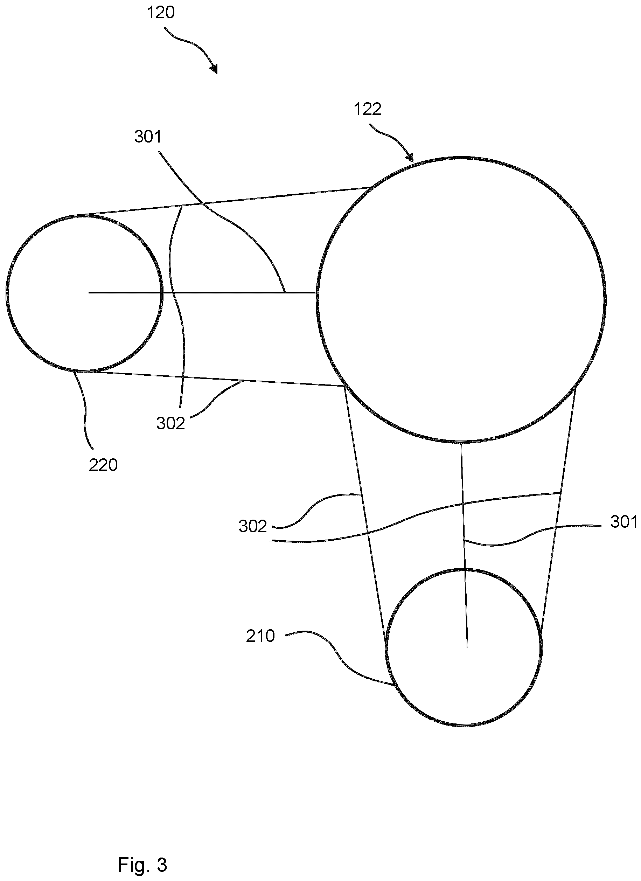

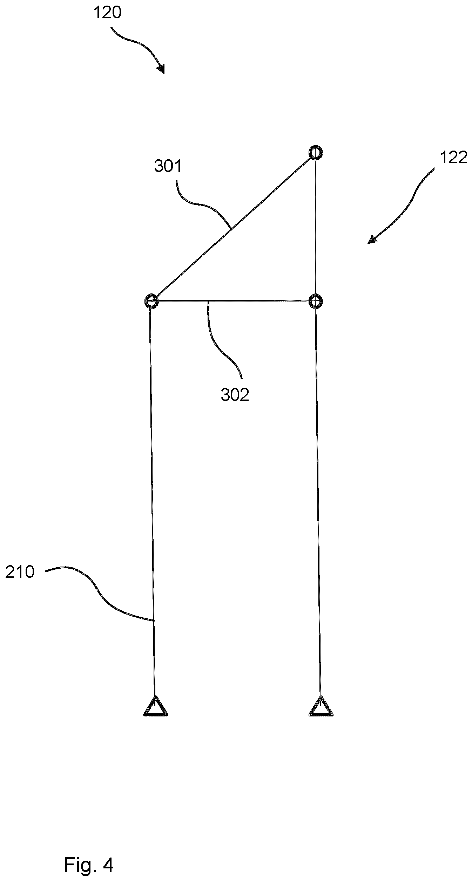

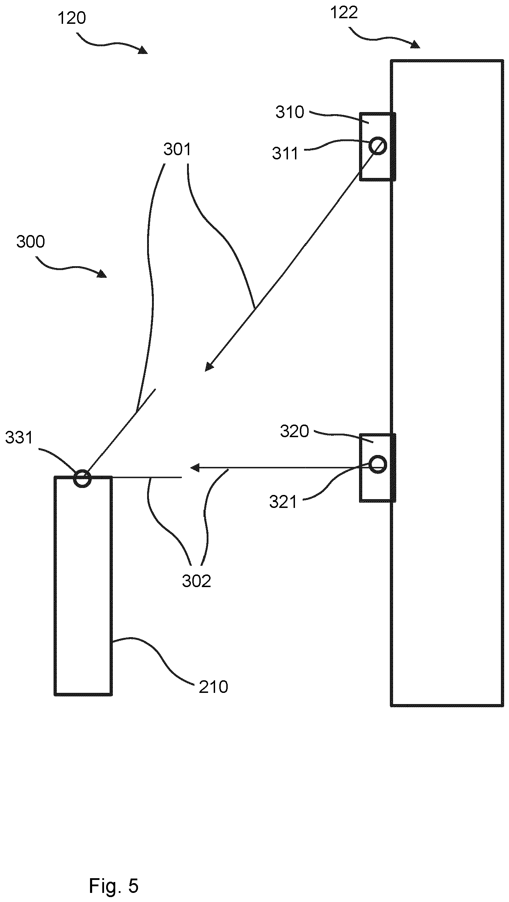

In den Fig. 2 und 3 sind zwei Satelliten-Türme 210, 220 dargestellt, die über eine zug- und druckfeste Verbindung 300 mit dem Haupt-Turm 122 verbunden sind. In der schematischen Knotenansicht nach Fig. 4 und in der Detailansicht der Verbindung 300 in Fig. 5 ist jeweils nur ein Satelliten-Turm 210 dargestellt. Die in den Figuren 4 und 5 gezeigten Prinzipien gelten jedoch ebenso für zwei oder mehrere Satelliten-Türme 210, 220.

Die zug- und druckfeste Verbindung 300 zwischen dem Haupt-Turm 122 und den Satelliten-Türme 210, 220 umfasst eine erste Verbindung 301 und eine zweite Verbindung 302. Die erste Verbindung 301 ist eine schräg nach oben verlaufende Verbindung und die zweite Verbindung 302 ist eine im Wesentlichen horizontale Verbindung. Optional können auch die zwei oder mehrere Satelliten-Türme 210, 220 untereinander durch eine dritte Verbindung 303 (s. Fig. 2) verbunden sein.

Wie in Fig. 5 zu erkennen ist, können am Haupt-Turm 122 Laschen 310, 320 vorgesehen sein mit Befestigungselementen 311, 321, um die ersten und zweiten Verbindungen 301, 302 aufzunehmen, die wiederum an Befestigungselementen der Satelliten-Türme (in Fig. 5 Befestigungselement 331 des Satelliten-Turms 210 gezeigt) befestigt sein können.

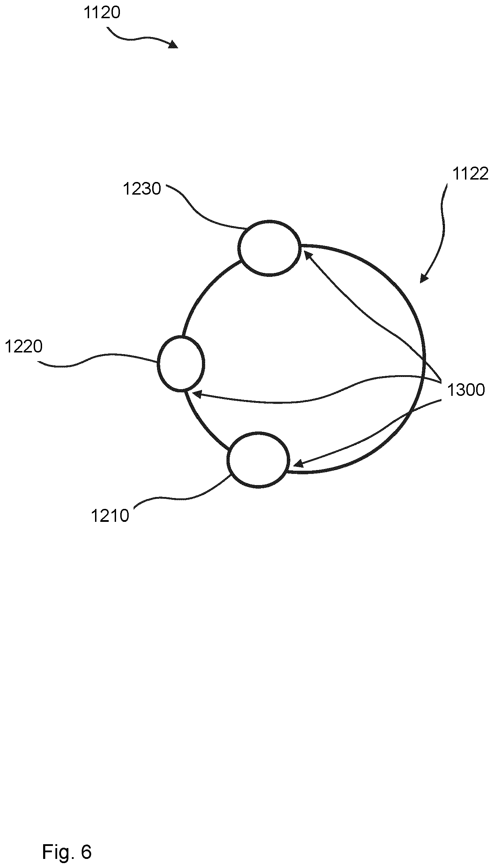

In Fig. 6 ist ein weiteres Ausführungsbeispiel eines Turms 1200 dargestellt mit einem Haupt-Turm 1122 und drei Satelliten-Türmen 1210, 1220, 1230. Die Verbindung 1300 zwischen dem Haupt-Turm 1122 und den drei Satelliten-Türmen 1210, 1220, 1230 ist im Beispiel nach Fig. 6 eine direkte Verbindung über die gesamte Höhe der Satelliten-Türme 1210, 1220, 1230 oder eines Teils davon.

Die zug- und druckfeste Verbindung 300, 1300 zwischen dem Haupt-Turm 122, 1122 und dem mindestens einen Satelliten-Turm 210, 220, 1210, 1220, 1230 kann Zug- und Druckkräfte in im Wesentlichen gleicher Höhe aufnehmen.

Ferner sind der Haupt-Turm 122, 1122 und die Satelliten-Türme 210, 220, 1210, 1220, 1230 asymmetrisch angeordnet. Zudem weisen die Satelliten-Türme 210, 220, 1210, 1220, 1230 eine geringere Höhe auf als der Haupt-Turm 122, 1122. Die Satelliten-Türme 210, 220, 1210, 1220, 1230 sind vom Haupt-Turm 122, 1122 beabstandet und im Wesentlichen parallel zum Haupt-Turm 122, 1122 angeordnet. Schließlich sind die Satelliten-Türme 210, 220, 1210, 1220, 1230 nicht zur Aufnahme einer Gondel 104 einer Windenergieanlage 100 ausgebildet.

Insbesondere ist bevorzugt, dass einer, zwei, mehrere oder alle der die Satelliten-Türme 210, 220, 1210, 1220, 1230 einen Speicher aufweist bzw. aufweisen und/oder als Speicher ausgebildet ist bzw. sind, beispielsweise Energie- und/oder Materialspeicher.

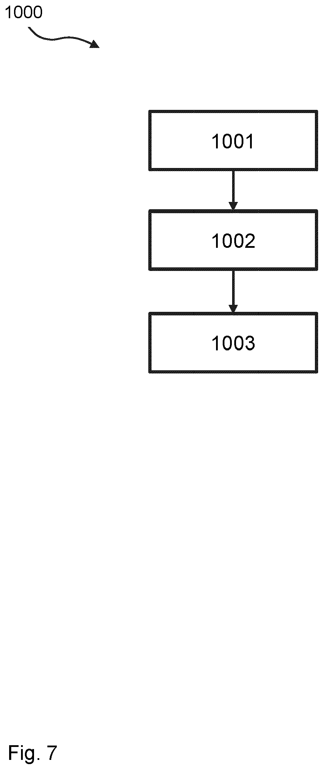

Figur 7 zeigt ein schematisches Ablaufdiagramm eines Ausführungsbeispiels eines Verfahrens 1000 zur Herstellung eines Turms 120, 1120 einer Windenergieanlage 100. Das Verfahren 1000 umfasst in einem ersten Schritt 1001 das Bereitstellen 1001 eines Haupt-Turms 122, 1122 mit einem Turmfuß und einem Turmkopf, wobei der Turmkopf ausgebildet ist zur Aufnahme einer Gondel 104 einer Windenergieanlage 100. In einem Schritt 1002 umfasst das Verfahren 1000 das Bereitstellen mindestens eines Satelliten-Turms 210, 220, 1210, 1220, 1230. In einem dritten Schritt 1003 umfasst das Verfahren 1000 das Verbinden 1003 des mindestens einen Satelliten-Turms 210, 220, 1210, 1220, 1230 mit dem Haupt-Turm 122 über eine zug- und druckfeste Verbindung 300, 1300.

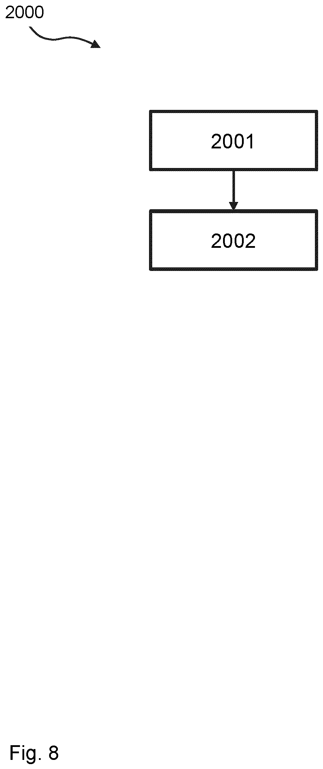

Figur 8 zeigt ein schematisches Ablaufdiagramm eines Ausführungsbeispiels eines Verfahrens 2000 zur Herstellung einer Windenergieanlage 100. Das Verfahren 2000 umfasst in einem ersten Schritt das Bereitstellen 2001 eines zuvor beschriebenen Turms 120, 1122. In einem zweiten Schritt 2002 umfasst das Verfahren 2000 das Anordnen einer Gondel 104 am Turmkopf des Haupt-Turms 122, 1122.

## Patentansprüche

1. Turm (120, 1120) für eine Windenergieanlage (100), umfassend
- einen Haupt-Turm (122, 1122) mit einem Turmfuß und einem Turmkopf, wobei der Turmkopf ausgebildet ist zur Aufnahme einer Gondel (104) einer Windenergieanlage (100),
- mindestens einen Satelliten-Turm (210, 220, 1210, 1220, 1230),
- wobei der mindestens eine Satelliten-Turm (210, 220, 1210, 1220, 1230) mit dem Haupt-Turm (122, 1122) über eine zug- und druckfeste Verbindung (300, 1300) verbunden ist.

2. Turm (120, 1120) nach dem vorhergehenden Anspruch,
**dadurch gekennzeichnet, dass** die zug- und druckfeste Verbindung (300, 1300) zwischen dem Haupt-Turm (122, 1122) und dem mindestens einen Satelliten-Turm (210, 220, 1210, 1220, 1230) Zug- und Druckkräfte in im Wesentlichen gleicher Höhe aufnehmen kann.

3. Turm (120) nach mindestens einem der vorhergehenden Ansprüche,
**dadurch gekennzeichnet, dass** die zug- und druckfeste Verbindung (300) zwischen dem Haupt-Turm (122) und dem mindestens einen Satelliten-Turm (210, 220) eine erste und eine zweite Verbindung (301, 302) umfasst.

4. Turm (120) nach mindestens einem der vorhergehenden Ansprüche,
**dadurch gekennzeichnet, dass** die erste Verbindung (301) eine schräg nach oben verlaufende Verbindung ist und/oder die zweite Verbindung (302) eine im Wesentlichen horizontale Verbindung ist.

5. Turm (120, 1120) nach mindestens einem der vorhergehenden Ansprüche, **dadurch gekennzeichnet, dass** der Haupt-Turm (122, 1122) und der mindestens eine Satelliten-Turm (210, 220, 1210, 1220, 1230) asymmetrisch angeordnet sind.

6. Turm (120, 1120) nach mindestens einem der vorhergehenden Ansprüche, **dadurch gekennzeichnet, dass** der mindestens eine Satelliten-Turm (210, 220, 1210, 1220, 1230) eine geringere Höhe aufweist als der Haupt-Turm (122, 1122).

7. Turm (120, 1120) nach mindestens einem der vorhergehenden Ansprüche, **dadurch gekennzeichnet, dass** der mindestens eine Satelliten-Turm (210, 220, 1210, 1220, 1230) vom Haupt-Turm (122, 1122) beabstandet und/oder im Wesentlichen parallel zum Haupt-Turm (122, 1122) angeordnet ist.

8. Turm (120, 1120) nach mindestens einem der vorhergehenden Ansprüche, **dadurch gekennzeichnet, dass** der mindestens eine Satelliten-Turm (210, 220, 1210, 1220, 1230) nicht zur Aufnahme einer Gondel (104) einer Windenergieanlage (100) ausgebildet ist.

9. Turm (120, 1120) nach mindestens einem der vorhergehenden Ansprüche, **dadurch gekennzeichnet, dass** der mindestens eine Satelliten-Turm (210, 220, 1210, 1220, 1230) einen Speicher aufweist und/oder als Speicher ausgebildet ist.

10. Turm (120, 1120) nach mindestens einem der vorhergehenden Ansprüche, umfassend zwei oder mehrere Satelliten-Türme (210, 220, 1210, 1220, 1230).

11. Turm (120, 1120) nach dem vorhergehenden Anspruch,
**dadurch gekennzeichnet, dass** der Haupt-Turm (122, 1122) und die zwei oder mehreren Satelliten-Türme (210, 220, 1210, 1220, 1230) asymmetrisch angeordnet sind.

12. Turm (120, 1120) nach mindestens einem der vorhergehenden Ansprüche, **dadurch gekennzeichnet, dass** genau ein Satelliten-Turm (210, 220, 1210, 1220, 1230) vorgesehen ist oder genau zwei Satelliten-Türme (210, 220, 1210, 1220, 1230) oder genau drei Satelliten-Türme (210, 220, 1210, 1220, 1230) vorgesehen sind.

13. Windenergieanlage (100) mit einem Turm (120, 1120) nach mindestens einem der vorhergehenden Ansprüche.

14. Verfahren (1000) zur Herstellung eines Turms einer Windenergieanlage (100), insbesondere eines Turms (120, 1120) nach mindestens einem der vorhergehenden Ansprüche 1-12,
umfassend:
- Bereitstellen (1001) eines Haupt-Turms (122, 1122) mit einem Turmfuß und einem Turmkopf, wobei der Turmkopf ausgebildet ist zur Aufnahme einer Gondel (104) einer Windenergieanlage (100),
- Bereitstellen (1002) mindestens eines Satelliten-Turms (210, 220, 1210, 1220, 1230),
- Verbinden (1003) des mindestens einen Satelliten-Turms (210, 220, 1210, 1220, 1230) mit dem Haupt-Turm (122, 1122) über eine zug- und druckfeste Verbindung (300, 1300).

15. Verfahren (2000) zur Herstellung einer Windenergieanlage (100), umfassend:
- Bereitstellen (2001) eines Turms (120, 1120) nach mindestens einem der vorhergehenden Ansprüche 1-12, vorzugsweise durch ein Verfahren nach dem vorhergehenden Anspruch,
- Anordnen (2002) einer Gondel (104) am Turmkopf des Haupt-Turms (122, 1122).
